# EUROPÄISCHE PATENTSCHRIFT

(11) **EP 3 795 970 B1**
(45) Veröffentlichungstag und Bekanntmachung des Hinweises auf die Patenterteilung: **14.08.2024**
(21) Anmeldenummer: 20194784.3
(22) Anmeldetag: 07.09.2020
(51) Int. Cl.: G01L 5/24, B25B 23/00, G01L 25/00, G01D 18/00

(54) **KALIBRIERBARES WERKZEUG, KALIBRIERSYSTEM UND VERFAHREN ZUM BETREIBEN EINES KALIBRIERBAREN WERKZEUGS**
CALIBRATABLE TOOL, CALIBRATION SYSTEM AND METHOD FOR OPERATING A CALIBRATABLE TOOL
OUTIL POUVANT ÊTRE ÉTALONNÉ, SYSTÈME D'ÉTALONNAGE ET PROCÉDÉ DE FONCTIONNEMENT D'UN OUTIL POUVANT ÊTRE ÉTALONNÉ

(30) Priorität: 18.09.2019 DE 102019125114
(43) Veröffentlichungstag der Anmeldung: 24.03.2021
(73) Patentinhaber: Hoffmann Engineering Services GmbH, 81241 München (DE)
(72) Erfinder: KÜNSTLER, Marko, 80634 München (DE); MEHLICH, Jens, 96479 Weitramsdorf (DE)
(74) Vertreter: Seemann & Partner Patentanwälte mbB

(56) Entgegenhaltungen:
- DE-U1- 202008 002 913
- US-A1- 2013 233 043
- US-A1- 2014 336 955
- US-A1- 2016 161 354
- SNAP-ON INDUSTRIAL: "Snap-on Torque Training Series - TechAngle, or ATECH, Electronic Torque Wrench", YOUTUBE, 30 October 2015 (2015-10-30), pages 1 pp., XP054981367, Retrieved from the Internet <URL:https://www.youtube.com/watch?v=ar1n3pJDFPE&feature=youtu.be> [retrieved on 20210203]
- SNAP-ON: "TECHANGLE ELECTRONIC TORQUE-ANGLE WRENCH", 1 June 2013 (2013-06-01), XP093143633, Retrieved from the Internet <URL:https://snap-on.eu/wp-content/uploads/2020/05/ATECH3FR250B-MANUAL.pdf> [retrieved on 20240320]

## Beschreibung

Die Erfindung betrifft ein kalibrierbares Werkzeug umfassend einen Prozessor, ein Speichermedium und eine Anzeigevorrichtung. Zudem betrifft die Erfindung ein Kalibriersystem umfassend ein kalibrierbares Werkzeug und ein Verfahren zum Betreiben eines kalibrierbaren Werkzeugs.

Bei der Nutzung kalibrierbarer Werkzeuge ist es von großer Bedeutung, dass eine regelmäßige und präzise Kalibrierung der Werkzeuge erfolgt. So ist beispielsweise eine Kalibrierung von Messwerkzeugen erforderlich, damit die ermittelten Messgrößen den tatsächlichen Messgrößen entsprechen. Auch andere Werkzeuge, wie beispielsweise Drehmomentschraubenschlüssel, müssen kalibriert werden, damit sich mit ihnen Verbindungselemente mit dem richtigen Drehmoment anziehen lassen.

Eine fehlerhafte Kalibrierung eines Werkzeugs führt vielfach zu Beschädigungen. So kann sich zum Beispiel eine irrtümlich zu schwach angezogene Schraube frühzeitig lösen oder ein fehlerhaftes Messwerkzeug falsche Messdaten liefern.

Um dies zu verhindern, werden kalibrierbare Werkzeuge in regelmäßigen Abständen mit einer entsprechenden Kalibriervorrichtung nachkalibriert. Dabei werden die physikalischen und/oder chemischen Eigenschaften des Werkzeugs gemessen und das Gerät so kalibriert, dass die physikalischen und/oder chemischen Eigenschaften mit Vorgabewerten übereinstimmen. Vielfach wird im Anschluss an die Kalibrierung ein Kalibrierzertifikat ausgestellt und auf das Werkzeug aufgeklebt. Ein solches Kalibrierzertifikat kann beispielsweise von der Kalibriervorrichtung oder von Hand ausgestellt werden und enthält ein nächstes Kalibrierungsdatum, bis zu dem das Werkzeug als kalibriert gilt. Stellt ein Nutzer fest, dass das nächste Kalibrierungsdatum auf einem Werkzeug, das er benutzen möchte, bereits abgelaufen ist oder demnächst abläuft, ist dies ein Hinweis an den Nutzer, dass das Werkzeug vor der Nutzung nachkalibriert werden muss.

Unter der Bezeichnung: "Snap-on Torque Training Series - Tech-Angle, or ATECH, Electronic Torque Wrench", abrufbar auf YouTube seit dem 30.10.2015, ist ein Online-Tutorial zur Bedienung eines elektronischen Drehmomentschlüssels der Firma ATECH verfügbar. Ab Minute 9 dieses Videos ist gezeigt, dass in dem Menü "Settings" unter "Show Info" das werkseitig hinterlegte letzte Kalibrierdatum des Drehmomentschlüssels abgerufen werden kann.

Aus US 2014/0336955 A1 ist ein elektronischer Drehmomentschlüssel bekannt, der mit einem Zeitstempel versehene Messdaten erstellt und speichert. Gemäß einer Ausführungsform wird eine seit der letzten Kalibrierung verstrichene Zeit mittels der Echtzeituhr-Schaltung basierend auf einem vorgegebenen Kalibrierungsintervall berechnet.

Aus US 2013/0233043 A1 ist eine Crimpzange bekannt, die die Anzahl der Betätigungen der Zange zählt. Wird eine festgelegte Anzahl von Betätigungen erreicht oder überschritten, so wird eine rote LED aktiviert, um anzuzeigen, dass das Werkzeug neu kalibriert werden muss.

Es ist die Aufgabe der Erfindung, ein verbessertes kalibrierbares Werkzeug, ein verbessertes Werkzeugsystem umfassend ein kalibrierbares Werkzeug und ein verbessertes Verfahren zum Betreiben eines kalibrierbaren Werkzeugs anzugeben, wobei die Kalibrierung des Werkzeugs sicherer, einfacher und schneller möglich sein soll.

Diese Aufgabe wird gelöst durch kalibrierbares Werkzeug, umfassend ein nicht flüchtiges Speichermedium, eine Anzeigevorrichtung und eine Empfangsvorrichtung, wobei das Werkzeug dazu eingerichtet ist, während eines Kalibrierungsvorgangs mit einer Kalibriervorrichtung gekoppelt zu werden und nach dem Kalibrierungsvorgang ein nächstes Kalibrierungsdatum oder einen zum Bestimmen des nächsten Kalibrierungsdatums benötigten Datensatz von der Kalibriervorrichtung zu empfangen, wobei das Werkzeug ferner dazu eingerichtet ist, das nächste Kalibrierungsdatum als Datumsdatensatz im Speichermedium des Werkzeugs zu speichern und als grafische Darstellung auf der Anzeigevorrichtung des Werkzeugs anzuzeigen, wobei der zum Bestimmen des nächsten Kalibrierungsdatums benötigte Datensatz ein festgelegter oder festlegbarer Zeitraum ist, der zum Berechnen des nächsten Kalibrierungsdatums zum derzeitigen Datum hinzuaddiert wird.

Vorteilhaft erleichtert das erfindungsgemäße kalibrierbare Werkzeug die Handhabung von Kalibrierzertifikaten. Das nächste Kalibrierungsdatum wird elektronisch im Speichermedium gespeichert und auf der Anzeigevorrichtung angezeigt. Dadurch entfällt die Notwendigkeit, ein Zertifikat auszudrucken und auf das Werkzeug aufzukleben. Da die Speicherung und Anzeige des nächsten Kalibrierungsdatums direkt im bzw. am Werkzeug erfolgt, ist zudem keinerlei zusätzliche Hardware oder Software zur Verwaltung des nächsten Kalibrierungsdatums des Werkzeugs erforderlich.

Das nächste Kalibrierungsdatum oder der zum Bestimmen des nächsten Kalibrierungsdatums benötigte Datensatz wird von der Kalibriervorrichtung an das Werkzeug übermittelt. So wird direkt nach dem Kalibrierungsvorgang das nächste Kalibrierungsdatum auf der Anzeigevorrichtung angezeigt. Insbesondere wird das nächste Kalibrierungsdatum oder der zum Bestimmen des nächsten Kalibrierungsdatums benötigte Datensatz nach dem Kalibrierungsvorgang automatisch von der Kalibriervorrichtung an das Werkzeug übermittelt. Dadurch wird der Kalibrierungsprozess wesentlich beschleunigt. Zudem werden Fehler vermieden, die bei dem manuellen Erstellen von Kalibrierzertifikaten auftreten können.

Insbesondere wird während des Kalibrierungsvorgangs eine Schnittstelle, insbesondere eine mechanische Schnittstelle, insbesondere ein Werkzeugkopf, des Werkzeugs an eine Kalibriereinheit der Kalibriervorrichtung gekoppelt. Die Schnittstelle, insbesondere der Werkzeugkopf, ist z.B. ein Messwertaufnehmer eines Messwerkzeugs oder ein Kopf eines Schraubenschlüssels, z.B. eines Drehmomentschraubenschlüssels. Das nächste Kalibrierungsdatum wird von der Kalibriervorrichtung oder dem Werkzeug berechnet, indem ein fester Zeitraum zum derzeitigen Datum hinzuaddiert wird. Der feste Zeitraum wird vorher festgelegt bzw. ist festlegbar und entspricht der Dauer, für die das Werkzeug bei korrekter Handhabung nach einer Kalibrierung mindestens kalibriert bleibt. Der feste Zeitraum ist insbesondere vom Werkzeugtyp abhängig. Das nächste Kalibrierungsdatum wird vorzugsweise als Datumsdatensatz von der Kalibriervorrichtung an die Empfangsvorrichtung des Werkzeugs übertragen.

Vorzugsweise umfasst das kalibrierbare Werkzeug einen Prozessor, der insbesondere dazu dient, die für die Anzeige auf der Anzeigevorrichtung benötigten Daten zu verarbeiten.

Das Speichermedium und der Prozessor sind insbesondere Bestandteile einer Steuerungsvorrichtung des Werkzeugs. Der Prozessor ist insbesondere ein, vorzugsweise handelsüblicher, Prozessor, der dazu eingerichtet ist, die Anzeigevorrichtung anzusteuern und Daten auf dem Speichermedium zu speichern oder von dem Speichermedium zu löschen und/oder Daten von dem Speichermedium abzurufen und als grafische Darstellung auf der Anzeigevorrichtung anzuzeigen. Die Anzeigevorrichtung ist insbesondere ein Display, das dazu eingerichtet ist, ein Datum und insbesondere zusätzlich auch andere Datensätze als grafische Darstellung anzuzeigen. Das nächste Kalibrierungsdatum ist das Datum, bis zu dem das Werkzeug als kalibriert gilt.

Bevorzugt ist das Werkzeug dazu eingerichtet, eine Warnmeldung auf der Anzeigevorrichtung anzuzeigen und insbesondere das Werkzeug für eine Nutzung zu sperren, wenn das nächste Kalibrierungsdatum erreicht oder überschritten ist. Dazu vergleicht das Werkzeug das nächste Kalibrierungsdatum mit dem aktuellen Datum. Das aktuelle Datum wird insbesondere durch ein Zeitmessmittel im Werkzeug, das durch Software oder Hardware realisiert ist, bestimmt. Alternativ ist vorgesehen, dass das aktuelle Datum über die Empfangsvorrichtung, vorzugsweise drahtlos, empfangen wird bzw. empfangbar ist. Die Warnmeldung weist einen Nutzer darauf hin, dass das Gerät möglicherweise nicht mehr korrekt kalibriert ist und nachkalibriert werden muss. Ein gesperrtes Werkzeug kann nicht mehr genutzt werden. Dazu wird beispielsweise die Messfunktionalität eines Messwerkzeugs deaktiviert oder ein Drehmomentschraubenschlüssel so eingestellt, dass er bei kleinsten Drehmomenten durchdreht, so dass Verbindungsmittel mit dem Drehmomentschraubenschlüssel nicht mehr angezogen werden können.

Vorzugsweise ist die Empfangseinheit zum drahtlosen oder drahtgebundenen Empfang des nächsten Kalibrierungsdatums oder des zum Bestimmen des nächsten Kalibrierungsdatums benötigten Datensatzes eingerichtet.

Durch einen drahtlosen Empfang des nächsten Kalibrierungsdatums wird die Übermittlung des nächsten Kalibrierungsdatums oder des zum Bestimmen des nächsten Kalibrierungsdatums benötigten Datensatzes vorteilhaft einfach gestaltet. Ein drahtgebundener Empfang erreicht eine höhere Übertragungsgeschwindigkeit.

Gemäß einer Ausführungsform ist das Werkzeug dazu eingerichtet, einen Datensatz mit Kalibrierungsdaten und/oder einen Datensatz mit Umgebungsbedingungen während des Kalibrierungsvorgangs und/oder einen Datensatz mit Daten betreffend den Erfolg des Kalibrierungsvorgangs zu empfangen und in dem Speichermedium zu speichern, wobei insbesondere der Datensatz mit Kalibrierungsdaten und/oder der Datensatz mit Umgebungsbedingungen und/oder der Datensatz mit Daten betreffend den Erfolg des Kalibrierungsvorgangs auf der Anzeigevorrichtung anzeigbar sind.

Kalibrierungsdaten werden insbesondere in Tabellenform gespeichert und/oder angezeigt. Die Kalibrierungsdaten enthalten insbesondere Informationen über den Verlauf des Kalibrierungsvorgangs, also beispielsweise über einzelne physikalische und/oder chemische Eigenschaften des Werkzeugs, die während des Kalibrierungsvorgangs gemessen wurden.

Der Datensatz mit Umgebungsbedingungen enthält beispielsweise Informationen bezüglich der Temperatur und/oder der Luftfeuchtigkeit während des Kalibrierungsvorgangs, welche mittels Sensoren an der Kalibriervorrichtung und/oder am Werkzeug gemessen wurden. Hierdurch kann ein an den bei der Kalibrierung herrschenden Umgebungsbedingungen angepasstes Kalibrierdatum erzeugt werden, das dann auf der Anzeigevorrichtung des Werkzeugs anzeigbar ist.

Der Datensatz mit Daten betreffend den Erfolg des Kalibrierungsvorgangs gibt an, ob das Werkzeug erfolgreich nachkalibriert wurde oder nicht. Wurde das Werkzeug nicht erfolgreich nachkalibriert, wird insbesondere kein nächstes Kalibrierungsdatum an das Werkzeug übermittelt. Stattdessen wird der Nutzer insbesondere durch eine Meldung auf der Anzeige aufgefordert, eine Justage des Werkzeugs vorzunehmen und/oder den Kalibrierungsvorgang zu wiederholen. Gemäß einer Ausführungsform ist der Datensatz mit Daten betreffend den Erfolg des Kalibrierungsvorgangs der zum Bestimmen des nächsten Kalibrierungsdatums benötigte Datensatz. Erhält das Werkzeug gemäß dieser Ausführungsform die Information, dass es erfolgreich kalibriert wurde, kann es selbstständig das nächste Kalibrierungsdatum bestimmen. Dazu addiert der Prozessor insbesondere zum aktuellen Datum einen festen Zeitraum, wie zuvor beschrieben.

Der feste Zeitraum kann abhängig von den Umgebungsbedingungen beim Kalibrieren sein.

Vorzugsweise ist das Werkzeug dazu eingerichtet, das im Speichermedium gespeicherte und auf der Anzeigevorrichtung angezeigte nächste Kalibrierungsdatum in Abhängigkeit von einer Anzahl von Nutzungszyklen des Werkzeugs und/oder einer Anzahl von, insbesondere externen, Ereignissen, die die Kalibrierung des Werkzeugs beeinträchtigen, anzupassen.

Das Werkzeug umfasst insbesondere wenigstens einen Sensor, mit dem die Anzahl der Nutzungszyklen des Werkzeugs erfassbar ist. Wird eine Anzahl von Nutzungszyklen erreicht, die einer vorgebbaren Anzahl von maximalen Nutzungszyklen des Werkzeugs pro Kalibrierung entspricht, so wird insbesondere das nächste Kalibrierungsdatum auf das aktuelle Datum gesetzt. Mit anderen Worten muss das Werkzeug nachkalibriert werden, wenn die maximale Anzahl von Nutzungszyklen erreicht ist. Zudem umfasst das Werkzeug insbesondere Temperatur- und/oder Beschleunigungssensoren. Erfassen diese Sensoren, dass das Werkzeug einer über einem vorgebbaren Grenzwert liegenden Temperatur und/oder Beschleunigung ausgesetzt ist, beispielsweise durch starkes Erhitzen oder einen Sturz, so wird insbesondere das nächste Kalibrierungsdatum auf das aktuelle Datum gesetzt. Damit wird erreicht, dass das Werkzeug nachkalibriert werden muss, nachdem es einem solchen externen Ereignis, das die Kalibrierung des Werkzeugs beeinträchtigt, ausgesetzt wurde.

Die Aufgabe wird zudem gelöst durch ein Kalibriersystem, umfassend ein kalibrierbares Werkzeug nach einem der zuvor genannten Ausführungsformen und eine Kalibriervorrichtung, die dazu eingerichtet ist, dass Werkzeug zu kalibrieren und das nächste Kalibrierungsdatum oder einen zum Bestimmen des nächsten Kalibrierungsdatums benötigten Datensatz an das Werkzeug, insbesondere an die Empfangsvorrichtung des Werkzeugs, zu übermitteln.

Das Kalibriersystem verkörpert die gleichen Vorteile, Merkmale und Eigenschaften wie das zuvor beschriebene kalibrierbare Werkzeug.

Die Kalibriervorrichtung umfasst insbesondere eine Sendevorrichtung, mit der das nächste Kalibrierungsdatum nach dem Kalibrierungsvorgang an die Empfangsvorrichtung des Werkzeugs übermittelt wird. Zudem umfasst die Kalibriervorrichtung eine Kalibriereinheit, die dazu eingerichtet ist, mit dem Werkzeugkopf des Werkzeugs gekoppelt zu werden, um die physikalischen und/oder chemischen Eigenschaften des Werkzeugs oder Werkzeugkopfs zu prüfen und das Werkzeug zu kalibrieren.

Die Kalibrierung des Werkzeugs mittels der Kalibriervorrichtung geschieht insbesondere manuell. Insbesondere sind eine Kalibriereinheit der Kalibriervorrichtung und eine Sendevorrichtung der Kalibriervorrichtung als separate Geräte ausgebildet. Beispielsweise ist die Kalibriereinheit ein oder mehrere Prüfkörper, mittels denen ein Messschieber kalibriert wird. Mit dem Messschieber werden die Prüfkörper vermessen und überprüft, ob die gemessenen Größen mit den vorgegebenen Größen der Prüfkörper übereinstimmen. Gegebenenfalls wird der Messschieber nachjustiert, um den Messschieber zu kalibrieren. Die Sendevorrichtung ist z.B. ein Computer. Auf dem Computer ist beispielsweise eine Software installiert, die einen Prüfplan bereitstellt und in die die mittels des Messschiebers gemessenen Grö-ßen eingetragen werden. Die Software erstellt insbesondere nach Abschluss der Kalibrierung ein Prüfzertifikat, in dem ein aktuelles Kalibrierdatum gespeichert ist und aus dem ein neues Kalibrierdatum berechnet werden kann. Es ist ebenso vorgesehen, dass ein Prüfzertifikat mit dem nächsten Kalibrierungsdatum und/oder mit einem zum Bestimmen des nächsten Kalibrierdatums benötigten Datensatz erzeugt und dieses an das Werkzeug übermittelt wird.

Die Kalibriervorrichtung ist gemäß einer alternativen Ausführungsform dazu eingerichtet, das Werkzeug automatisch zu kalibrieren. Insbesondere ist die Kalibriervorrichtung als eine einzelne Baugruppe realisiert.

Insbesondere ist die Kalibriervorrichtung dazu eingerichtet, das nächste Kalibrierungsdatum oder den zum Bestimmen des nächsten Kalibrierungsdatums benötigten Datensatz zu berechnen. Insbesondere ist die Kalibriereinheit der Kalibriervorrichtung und/oder die Sendevorrichtung der Kalibriervorrichtung dazu eingerichtet, das nächste Kalibrierungsdatum oder den zum Bestimmen des nächsten Kalibrierungsdatums benötigten Datensatz zu berechnen.

Die Aufgabe wird weiterhin gelöst durch ein Verfahren zum Betreiben eines kalibrierbaren Werkzeugs, wobei das Werkzeug vor einem Kalibrierungsvorgang mit einer Kalibriervorrichtung gekoppelt wird, wobei das Werkzeug mittels der Kalibriervorrichtung während des Kalibrierungsvorgangs kalibriert wird, wobei nach Abschluss des Kalibrierungsvorgangs das nächste Kalibrierungsdatum oder ein zum Bestimmen des nächsten Kalibrierungsdatums benötigter Datensatz von der Kalibriervorrichtung an eine Empfangsvorrichtung des Werkzeugs übermittelt wird, wobei das nächste Kalibrierungsdatum als Datumsdatensatz auf einem nicht flüchtigen Speichermedium des Werkzeugs gespeichert und als grafische Darstellung auf einer Anzeigevorrichtung des Werkzeugs angezeigt wird, wobei der zum Bestimmen des nächsten Kalibrierungsdatums benötigte Datensatz ein festgelegter oder festlegbarer Zeitraum ist, der zum Berechnen des nächsten Kalibrierungsdatums zum derzeitigen Datum hinzuaddiert wird.

Das Verfahren zum Betreiben eines kalibrierbaren Werkzeugs verkörpert die gleichen Vorteile, Merkmale und Eigenschaften wie das zuvor beschriebene kalibrierbare Werkzeug und das zuvor beschriebene Kalibriersystem.

Bevorzugt wird eine Warnmeldung auf der Anzeigevorrichtung angezeigt und insbesondere das Werkzeug für eine Nutzung gesperrt, wenn das nächste Kalibrierungsdatum erreicht oder überschritten ist.

Ein zuvor auf dem Speichermedium gespeichertes nächstes Kalibrierungsdatum wird insbesondere mit der Kalibrierung überschrieben. Auf der Anzeigevorrichtung wird insbesondere immer das zuletzt übermittelte oder das zuletzt vom Werkzeug oder der Kalibriervorrichtung berechnete Kalibrierungsdatum angezeigt.

Vorzugsweise wird das nächste Kalibrierungsdatum oder der zum Bestimmen des nächsten Kalibrierungsdatums benötigte Datensatz drahtlos oder drahtgebunden an die Empfangsvorrichtung des Werkzeugs übermittelt.

Weiterhin werden vorzugsweise ein Datensatz mit Kalibrierungsdaten und/oder ein Datensatz mit Umgebungsbedingungen während des Kalibrierungsvorgangs und/oder ein Datensatz mit Daten betreffend den Erfolg des Kalibrierungsvorgangs von der Kalibriervorrichtung an die Empfangseinheit des Werkzeugs übermittelt und auf dem Speichermedium des Werkzeugs gespeichert, wobei insbesondere der-Datensatz mit Kalibrierungsdaten und/oder der Datensatz mit Umgebungsbedingungen und/oder der Datensatz mit Daten betreffend den Erfolg des Kalibrierungsvorgangs auf der Anzeigevorrichtung angezeigt werden.

Bevorzugt wird das im Speichermedium gespeicherte und auf der Anzeigevorrichtung angezeigte nächste Kalibrierungsdatum in Abhängigkeit von einer Anzahl von Nutzungszyklen des Werkzeugs und/oder einer Anzahl von, insbesondere externen, Ereignissen, die die Kalibrierung des Werkzeugs beeinträchtigen, angepasst.

Gemäß einer Ausführungsform des Verfahrens kalibriert die Kalibriervorrichtung das Werkzeug automatisch.

Im Rahmen der Erfindung sind Merkmale, die mit "insbesondere" oder "vorzugsweise" gekennzeichnet sind, als fakultative Merkmale zu verstehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Kalibriersystems mit einem kalibrierbaren Werkzeug und einer Kalibriervorrichtung,
- Fig. 2: eine schematisch vereinfachte Darstellung der Komponenten eines Kalibriersystems,
- Fig. 3: ein Flussdiagramm eines Verfahrens zum Kalibrieren eines kalibrierbaren Werkzeugs,
- Fig. 4: eine schematisch vereinfachte Darstellung eines Kalibriersystems mit einem kalibrierbaren Werkzeug und einer mehrteiligen Kalibriervorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

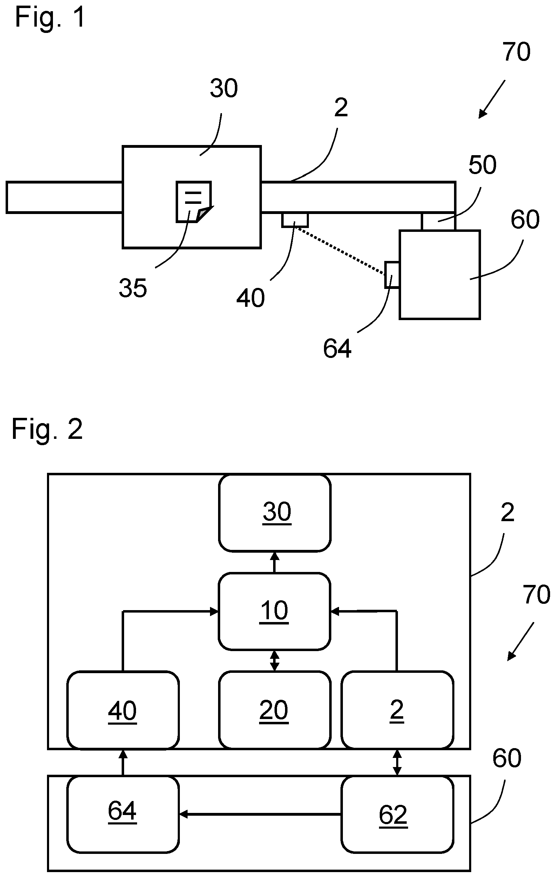

In Fig. 1 ist schematisch vereinfacht ein Kalibriersystem 70 gezeigt. Das Kalibiersystem umfasst ein kalibrierbares Werkzeug 2 und eine Kalibriervorrichtung 60. Bei dem in Fig. 1 beispielhaft gezeigten Werkzeug 2 handelt es sich um einen Drehmomentschraubenschlüssel. Die Erfindung ist jedoch nicht auf Drehmomentschraubenschlüssel beschränkt, sondern umfasst alle Arten von kalibierbaren Werkzeugen 2.

Das Werkzeug 2 weist einen Werkzeugkopf 50 auf, bei dem Drehmomentschlüssel aus Fig. 1 ist dieser ein Schraubenschlüsselkopf. Zum Kalibrieren des Werkzeugs 2 wird eine Kalibriervorrichtung 60 an den Werkzeugkopf 50 gekoppelt. Die Kalibriervorrichtung 60 kalibriert das Werkzeug 2. Anschließend berechnet die Kalibriervorrichtung 60 ein nächstes Kalibrierungsdatum 35, bis zu dem das Werkzeug 2 als kalibriert gilt, und übermittelt die Datumsdaten des nächsten Kalibrierungsdatums 35 mittels einer Sendevorrichtung 64 an eine Empfangsvorrichtung 40 des Werkzeugs 2. Alternativ zum Berechnen des nächsten Kalibrierungsdatums kann auch ein Vorgeben desselben von der Kalibriervorrichtung stehen. Das nächste Kalibrierungsdatum 35 wird berechnet, indem ein von dem Werkzeug 2 und dem Kalibrierungsvorgang abhängiger, festlegbarer Zeitraum zu dem aktuellen Datum hinzuaddiert wird.

Zudem werden vorzugsweise noch weitere Datensätze an die Empfangsvorrichtung übermittelt, z.B. ein Datensatz mit Kalibrierungsdaten, der die Messwerte während der Kalibrierung beschreibt, ein Datensatz mit Umgebungsbedingungen während des Kalibrierungsvorgangs, z.B. der Temperatur und/oder der Luftfeuchtigkeit während der Kalibrierung, und/oder ein Datensatz mit Daten betreffend den Erfolg des Kalibrierungsvorgangs, der beschreibt, ob die Kalibrierung erfolgreich war.

Gemäß einer alternativen Ausführungsform berechnet das Werkzeug 2 selbst das nächste Kalibrierungsdatum 35, sobald es von der Kalibriervorrichtung 60 übermittelt bekommen hat, dass der Kalibrierungsvorgang erfolgreich war.

Das Werkzeug 2 weist zudem eine Anzeigevorrichtung 30 auf, beispielsweise einen Bildschirm. Auf diesem Bildschirm wird das nächste Kalibrierungsdatum 35 angezeigt. So kann ein Nutzer des Werkzeugs 2 sofort ablesen, wie lange das Werkzeug 2 noch kalibriert ist.

Fig. 2 zeigt die Komponenten des Kalibriersystems 70 in einer schematisch vereinfachten Darstellung. Dieser Darstellung ist zu entnehmen, dass das Werkzeug 2 einen Prozessor 10 umfasst, der ein ebenfalls umfasstes nicht-flüchtiges Speichermedium 20 und die Anzeigevorrichtung 30 steuert. Auch der Werkzeugkopf 50 ist in der beispielhaften Ausführungsform mit dem Prozessor 10 verbunden. Dadurch ist es beispielsweise bei einem Drehmomentschraubenschlüssel möglich, ein aktuell auf den Werkzeugkopf 50 wirkendes Drehmoment an den Prozessor 10 zu übermitteln und auf der Anzeigevorrichtung 30 zusätzlich oder alternativ zum nächsten Kalibrierungsdatum 35 anzuzeigen.

Während des Kalibrierungsvorgangs prüft eine Kalibriereinheit 62 der Kalibriervorrichtung 60 physikalische und/oder chemische Eigenschaften des Werkzeugs 2, insbesondere des Werkzeugkopfs 50, und kalibriert das Werkzeug 2. Anschließend berechnet die Kalibriervorrichtung 60 das nächste Kalibrierungsdatum 35 und übermittelt es über die Sendevorrichtung 64 an die Empfangsvorrichtung 40 des Werkzeugs 2. Die Empfangsvorrichtung 40 übermittelt das nächste Kalibrierungsdatum 35 an den Prozessor 10, welcher es auf dem Speichermedium 20 speichert und die Anzeigevorrichtung 30 derart ansteuert, dass das nächste Kalibrierungsdatum 35 auf der Anzeigevorrichtung 30 angezeigt wird. Auch andere Datensätze betreffend den Kalibrierungsvorgang werden auf gleiche oder ähnliche Weise an das Werkzeug 2 übermittelt.

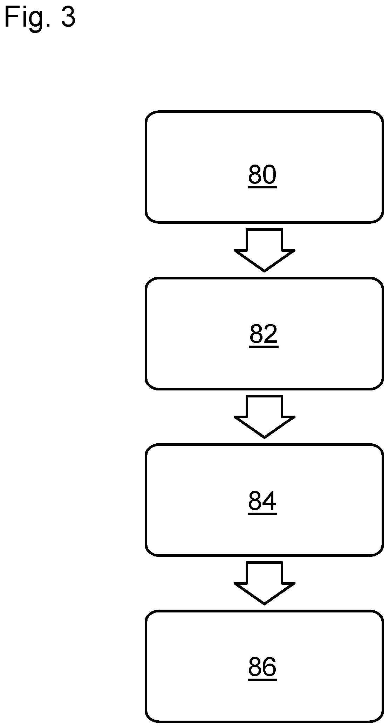

Fig. 3 zeigt ein Flussdiagramm, das einen beispielhaften Kalibrierungsvorgang des Werkzeugs 2 darstellt. In Verfahrensschritt 80 wird die Kalibrierungseinheit 62 der Kalibriervorrichtung 60 an den Werkzeugkopf 50 des Werkzeugs 2 gekoppelt. Anschließend werden in Schritt 82 die physikalischen und/oder chemischen Eigenschaften des Werkzeugs 2 erfasst und das Werkzeug 2 kalibriert. Danach werden in Schritt 84 alle Kalibrierungsdaten, also das nächste Kalibrierungsdatum sowie insbesondere auch weitere Datensätze drahtlos oder drahtgebunden an den Prozessor 10 des Werkzeugs 2 übermittelt. In Schritt 86 werden schließlich die Datensätze auf dem Speichermedium 20 gespeichert und auf der Anzeigevorrichtung 30 angezeigt. Die Datensätze können entweder gleichzeitig auf der Anzeigevorrichtung 35 angezeigt werden oder die Anzeigevorrichtung kann zwischen der Anzeige der verschiedenen Datensätze umgeschaltet werden. Dies ist insbesondere bei einer kleinen Anzeigevorrichtung 30 sinnvoll.

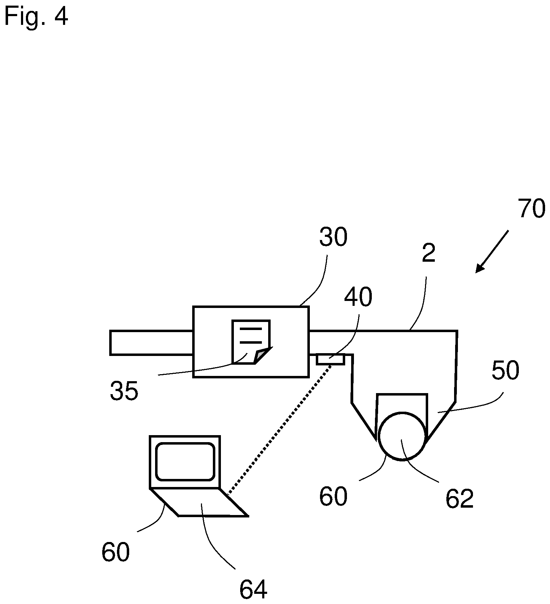

Fig. 4 zeigt schematisch vereinfacht eine alternative Ausführungsform des Kalibriersystems 70 aus Fig. 1, bei dem die Kalibrierungseinheit 62 der Kalibriervorrichtung 60 und die Sendevorrichtung 64 der Kalibriervorrichtung 60 als separate Geräte ausgebildet sind. In dem vorliegend gezeigten Beispiel ist das Werkzeug 2 ein elektronischer Messschieber, die Kalibrierungseinheit 62 ein oder mehrere Prüfkörper und die Sendevorrichtung 64 ist ein Computer, z.B. ein Laptop. Mittels der Kalibrierungseinheit 62 wird das Werkzeug 2 kalibriert. Beispielsweise hat der Prüfkörper eine vorgegebene Größe, so dass durch Ablesen der vom Messschieber gemessenen Größe überprüft werden kann, ob der Messschieber korrekt kalibriert ist. Die gemessene Größe wird in den Computer eingetragen. Mittels einer Software auf dem Computer wird ein Prüfzertifikat umfassend das nächste Kalibrierungsdatum 35 oder ein zum Bestimmen des nächsten Kalibrierungsdatums 35 benötigter Datensatz erstellt und an die Empfangsvorrichtung 40 übermittelt. Dies geschieht beispielsweise drahtlos, z.B. über Bluetooth, oder drahtgebunden. Im Übrigen gleicht die in Fig. 4 gezeigte Ausführungsform der in Fig. 1 gezeigten Ausführungsform.

### Bezugszeichenliste

- 2: Werkzeug
- 10: Prozessor
- 20: Speichermedium
- 30: Anzeigevorrichtung
- 35: Kalibrierungsdatum
- 40: Empfangsvorrichtung
- 50: Werkzeugkopf
- 60: Kalibriervorrichtung
- 62: Kalibriereinheit
- 64: Sendevorrichtung
- 70: Kalibriersystem
- 80: Verfahrensschritt
- 82: Verfahrensschritt
- 84: Verfahrensschritt
- 86: Verfahrensschritt

## Patentansprüche

1. Kalibrierbares Werkzeug (2), umfassend ein nicht flüchtiges Speichermedium (20), eine Anzeigevorrichtung (30) und eine Empfangsvorrichtung (40), wobei das Werkzeug (2) dazu eingerichtet ist, während eines Kalibrierungsvorgangs mit einer Kalibriervorrichtung (60) gekoppelt zu werden und nach dem Kalibrierungsvorgang ein nächstes Kalibrierungsdatum (35) oder einen zum Bestimmen des nächsten Kalibrierungsdatums (35) benötigten Datensatz von der Kalibriervorrichtung (60) zu empfangen, wobei das Werkzeug (2) ferner dazu eingerichtet ist, das nächste Kalibrierungsdatum (35) als Datumsdatensatz im Speichermedium (20) des Werkzeugs (2) zu speichern und als grafische Darstellung auf der Anzeigevorrichtung (30) des Werkzeugs (2) anzuzeigen, wobei der zum Bestimmen des nächsten Kalibrierungsdatums (35) benötigte Datensatz ein festgelegter oder festlegbarer Zeitraum ist, der zum Berechnen des nächsten Kalibrierungsdatums (35) zum derzeitigen Datum hinzuaddiert wird.

2. Werkzeug (2) nach Anspruch 1, **dadurch gekennzeichnet, dass** das Werkzeug (2) dazu eingerichtet ist, eine Warnmeldung auf der Anzeigevorrichtung (30) anzuzeigen und insbesondere das Werkzeug (2) für eine Nutzung zu sperren, wenn das nächste Kalibrierungsdatum (35) erreicht oder überschritten ist.

3. Werkzeug (2) nach Anspruch 1 oder 2, **dadurch gekennzeichnet, dass** die Empfangseinheit (40) zum drahtlosen oder drahtgebundenen Empfang des nächsten Kalibrierungsdatums (35) oder des zum Bestimmen des nächsten Kalibrierungsdatums (35) benötigten Datensatzes eingerichtet ist.

4. Werkzeug (2) nach einem der Ansprüche 1 bis 3, **dadurch gekennzeichnet, dass** das Werkzeug (2) dazu eingerichtet ist, einen Datensatz mit Kalibrierungsdaten und/oder einen Datensatz mit Umgebungsbedingungen während des Kalibrierungsvorgangs und/oder einen Datensatz mit Daten betreffend den Erfolg des Kalibrierungsvorgangs zu empfangen und in dem Speichermedium (20) zu speichern, wobei insbesondere der Datensatz mit Kalibrierungsdaten und/oder der Datensatz mit Umgebungsbedingungen und/oder der Datensatz mit Daten betreffend den Erfolg des Kalibrierungsvorgangs auf der Anzeigevorrichtung (30) anzeigbar sind.

5. Werkzeug (2) nach einem der Ansprüche 1 bis 4, **dadurch gekennzeichnet, dass** das Werkzeug (2) dazu eingerichtet ist, das im Speichermedium (20) gespeicherte und auf der Anzeigevorrichtung (30) angezeigte nächste Kalibrierungsdatum (35) in Abhängigkeit von einer Anzahl von Nutzungszyklen des Werkzeugs (2) und/oder einer Anzahl von, insbesondere externen, Ereignissen, die die Kalibrierung des Werkzeugs (2) beeinträchtigen, anzupassen.

6. Kalibriersystem (70), umfassend ein kalibrierbares Werkzeug (2) nach einem der Ansprüche 1 bis 5 und eine Kalibriervorrichtung (60), die dazu eingerichtet ist, das Werkzeug (2) zu kalibrieren und das nächste Kalibrierungsdatum (35) oder einen zum Bestimmen des nächsten Kalibrierungsdatums (35) benötigten Datensatz an das Werkzeug (2), insbesondere an die Empfangsvorrichtung (40) des Werkzeugs (2), zu übermitteln.

7. Kalibriersystem (70) nach Anspruch 6, **dadurch gekennzeichnet, dass** die Kalibriervorrichtung (60) dazu eingerichtet ist, das Werkzeug (2) automatisch zu kalibrieren.

8. Verfahren zum Betreiben eines kalibrierbaren Werkzeugs (2), wobei das Werkzeug (2) vor einem Kalibrierungsvorgang mit einer Kalibriervorrichtung (60) gekoppelt wird, wobei das Werkzeug (2) mittels der Kalibriervorrichtung (60) während des Kalibrierungsvorgangs kalibriert wird, wobei nach Abschluss des Kalibrierungsvorgangs das nächste Kalibrierungsdatum (35) oder ein zum Bestimmen des nächsten Kalibrierungsdatums (35) benötigter Datensatz von der Kalibriervorrichtung (60) an eine Empfangsvorrichtung (40) des Werkzeugs (2) übermittelt wird, wobei das nächste Kalibrierungsdatum (35) als Datumsdatensatz auf einem nicht flüchtigen Speichermedium (20) des Werkzeugs (20) gespeichert und als grafische Darstellung auf einer Anzeigevorrichtung (30) des Werkzeugs (2) angezeigt wird, wobei der zum Bestimmen des nächsten Kalibrierungsdatums (35) benötigte Datensatz ein festgelegter oder festlegbarer Zeitraum ist, der zum Berechnen des nächsten Kalibrierungsdatums (35) zum derzeitigen Datum hinzuaddiert wird.

9. Verfahren nach Anspruch 8, **dadurch gekennzeichnet, dass** eine Warnmeldung auf der Anzeigevorrichtung (30) angezeigt und insbesondere das Werkzeug (2) für eine Nutzung gesperrt wird, wenn das nächste Kalibrierungsdatum (35) erreicht oder überschritten ist.

10. Verfahren nach Anspruch 8 oder 9, **dadurch gekennzeichnet, dass** das nächste Kalibrierungsdatum (35) oder der zum Bestimmen des nächsten Kalibrierungsdatums (35) benötigte Datensatz drahtlos oder drahtgebunden an die Empfangsvorrichtung (40) des Werkzeugs (2) übermittelt wird.

11. Verfahren nach einem der Ansprüche 8 bis 10, **dadurch gekennzeichnet, dass** ein Datensatz mit Kalibrierungsdaten und/oder ein Datensatz mit Umgebungsbedingungen während des Kalibrierungsvorgangs und/oder ein Datensatz mit Daten betreffend den Erfolg des Kalibrierungsvorgangs von der Kalibriervorrichtung (60) an die Empfangseinheit (40) des Werkzeugs (2) übermittelt und auf dem Speichermedium (20) des Werkzeugs (2) gespeichert werden, wobei insbesondere der Datensatz mit Kalibrierungsdaten und/oder der Datensatz mit Umgebungsbedingungen und/oder der Datensatz mit Daten betreffend den Erfolg des Kalibrierungsvorgangs auf der Anzeigevorrichtung (30) angezeigt werden.

12. Verfahren nach einem der Ansprüche 8 bis 11, **dadurch gekennzeichnet, dass** das im Speichermedium (20) gespeicherte und auf der Anzeigevorrichtung (30) angezeigte nächste Kalibrierungsdatum (35) in Abhängigkeit von einer Anzahl von Nutzungszyklen des Werkzeugs (2) und/oder einer Anzahl von externen Ereignissen, die die Kalibrierung des Werkzeugs (2) beeinträchtigen, angepasst wird.

13. Verfahren nach einem der Ansprüche 8 bis 12, **dadurch gekennzeichnet, dass** die Kalibriervorrichtung (60) das Werkzeug (2) automatisch kalibriert.

## Claims

1. A calibratable tool (2) comprising a non-volatile storage medium (20), a display device (30) and a receiving device (40), wherein the tool (2) is configured to be coupled to a calibration device (60) during a calibration process and, after the calibration process, to receive a next calibration date (35), or a data record required for determining the next calibration date (35), from the calibration device (60), wherein the tool (2) is furthermore configured to save the next calibration date (35) as a date data record in the storage medium (20) of the tool (2), and to display it as a graphic representation on the display device (30) of the tool (2), wherein the data record required for determining the next calibration date (35) is a fixed or fixable period, which is added to the current date for calculation of the next calibration date (35).

2. The tool (2) according to claim 1, **characterized in that** the tool (2) is configured to display a warning message on the display device (30) and in particular to block the tool (2) from use when the next calibration date (35) has been reached or is exceeded.

3. The tool (2) according to claim 1 or 2, **characterized in that** the receiving unit (40) is configured to receive the next calibration date (35), or the data record required to determine the next calibration date (35), wirelessly or over wire.

4. The tool (2) according to one of claims 1 to 3, **characterized in that** the tool (2) is configured to receive a data record with calibration data and/or a data record with environmental conditions during the calibration process, and/or a data record with data relating to the success of the calibration process and to save it in the storage medium (20), wherein in particular the data record with calibration data, and/or the data record with environmental conditions, and/or the data record with data relating to the success of the calibration process can be displayed on the display device (30).

5. The tool (2) according to one of claims 1 to 4, **characterized in that** the tool (2) is configured to adapt the next calibration date (35) saved in the storage medium (20) and displayed on the display device (30) depending on a number of cycles of use of the tool (2), and/or a number of in particular external events that impair the calibration of the tool (2).

6. A calibration system (70) comprising a calibratable tool (2) according to one of the claims 1 to 5, and a calibration device (60) that is configured to calibrate the tool (2) and transmit the next calibration date (35), or a data record required to determine the next calibration date (35), to the tool (2), in particular to the receiving device (40) of the tool (2).

7. The calibration system (70) according to claim 6, **characterized in that** the calibration device (60) is configured to automatically calibrate the tool (2).

8. A method for operating a calibratable tool (2), wherein the tool (2) is coupled to a calibration device (60) before a calibration process, wherein the tool (2) is calibrated by means of the calibration device (60) during the calibration process, wherein after conclusion of the calibration process, the next calibration date (35), or a data record required to determine the next calibration date (35), is transmitted by the calibration device (60) to a receiving device (40) of the tool (2), wherein the next calibration date (35) is saved as a date data record on a non-volatile storage medium (20) of the tool (2) and is displayed as a graphic representation on a display device (30) of the tool (2), wherein the data record required for determining the next calibration date (35) is a fixed or fixable period, which is added to the current date for calculation of the next calibration date (35).

9. The method according to claim 8, **characterized in that** a warning message is displayed on the display device (30), and in particular the tool (2) is blocked from use when the next calibration date (35) has been reached or is exceeded.

10. The method according to claim 8 or 9, **characterized in that** the next calibration date (35), or the data record required for determining the next calibration date (35), is transmitted wirelessly or by wire to the receiving device (40) of the tool (2).

11. The method according to one of claims 8 to 10, **characterized in that** a data record with calibration data and/or a data record with environmental conditions during the calibration process, and/or a data record with data relating to the success of the calibration process, is transmitted by the calibration device (60) to the receiving unit (40) of the tool (2) and saved on the storage medium (20) of the tool (2), wherein in particular the data record with calibration data, and/or the data record with environmental conditions, and/or the data record with data relating to the success of the calibration process are displayed on the display device (30).

12. The method according to one of claims 8 to 11, **characterized in that** the next calibration date (35) saved in the storage medium (20) and displayed on the display device (30) is adapted depending on a number of cycles of use of the tool (2), and/or a number of external events that impair the calibration of the tool (2).

13. The method according to one of claims 8 to 12, **characterized in that** the calibration device (60) automatically calibrates the tool (2).

## Revendications

1. Outil (2) apte à être étalonné, comprenant un support de stockage non volatil (20), un dispositif d'affichage (30) et un dispositif de réception (40), l'outil (2) étant conçu pour être relié à un dispositif d'étalonnage (60) pendant une opération d'étalonnage et pour recevoir du dispositif d'étalonnage (60), après l'opération d'étalonnage, une prochaine date d'étalonnage (35) ou un ensemble de données nécessaires pour déterminer la prochaine date d'étalonnage (35), l'outil (2) étant en outre conçu pour stocker la prochaine date d'étalonnage (35) sous la forme d'un enregistrement de date dans le support de stockage (20) de l'outil (2) et pour l'afficher sous la forme d'une représentation graphique sur le dispositif d'affichage (30) de l'outil (2), l'enregistrement de données nécessaire pour déterminer la prochaine date d'étalonnage (35) étant une période de temps fixe ou apte à être fixée qui est ajoutée à la date actuelle pour calculer la prochaine date d'étalonnage (35).

2. Outil (2) selon la revendication 1, **caractérisé en ce que** l'outil (2) est agencé pour afficher un message d'alerte sur le dispositif d'affichage (30) et notamment pour bloquer l'outil (2) à l'utilisation lorsque la prochaine date d'étalonnage (35) est atteinte ou dépassée.

3. Outil (2) selon la revendication 1 ou la revendication 2, **caractérisé en ce que** l'unité de réception (40) est agencée pour recevoir, sans fil ou de façon filaire, la prochaine date d'étalonnage (35) ou l'ensemble des données nécessaires pour déterminer la prochaine date d'étalonnage (35).

4. Outil (2) selon l'une des revendications 1 à 3, **caractérisé en ce que** l'outil (2) est agencé pour recevoir et stocker dans le support de stockage (20) un ensemble de données avec des données d'étalonnage et/ou un ensemble de données avec des conditions d'environnement pendant l'opération d'étalonnage et/ou un ensemble de données avec des données concernant le succès de l'opération d'étalonnage, l'ensemble de données avec des données d'étalonnage et/ou l'ensemble de données avec des conditions d'environnement et/ou l'ensemble de données avec des données concernant le succès de l'opération d'étalonnage étant notamment aptes à être affichés sur le dispositif d'affichage (30).

5. Outil (2) selon l'une des revendications 1 à 4, **caractérisé en ce que** l'outil (2) est agencé de façon à adapter la prochaine date d'étalonnage (35) enregistrée dans le support de stockage (20) et affichée sur le dispositif d'affichage (30) en fonction d'un nombre de cycles d'utilisation de l'outil (2) et/ou d'un nombre d'événements, notamment externes, qui affectent l'étalonnage de l'outil (2).

6. Système d'étalonnage (70) comprenant un outil (2) apte à être étalonné selon l'une des revendications 1 à 5 et un dispositif d'étalonnage (60), et qui est agencé pour transmettre à l'outil (2), notamment au dispositif de réception (40) de l'outil (2), la prochaine date d'étalonnage (35) ou un ensemble de données nécessaires pour déterminer la prochaine date d'étalonnage (35).

7. Système d'étalonnage (70) selon la revendication 6, **caractérisé en ce que** le dispositif d'étalonnage (60) est agencé pour étalonner automatiquement l'outil (2).

8. Procédé d'exploitation d'un outil (2) apte à être étalonné, l'outil (2) étant relié à un dispositif d'étalonnage (60) avant une opération d'étalonnage, l'outil (2) étant étalonné au moyen du dispositif d'étalonnage (60) pendant l'opération d'étalonnage, la prochaine date d'étalonnage (35) ou un ensemble de données nécessaire pour déterminer la prochaine date d'étalonnage (35) étant transmis par le dispositif d'étalonnage (60) à un dispositif de réception (40) de l'outil (2) après la fin de l'opération d'étalonnage, la prochaine date d'étalonnage (35) étant stockée sous forme d'un ensemble de données de date sur un support de stockage non volatile (20) de l'outil (2) et affichée sous forme de représentation graphique sur un dispositif d'affichage (30) de l'outil (2), l'ensemble de données nécessaire pour déterminer la prochaine date d'étalonnage (35) étant une période de temps fixe ou apte à être fixée qui est ajoutée à la date actuelle pour calculer la prochaine date d'étalonnage (35).

9. Procédé selon la revendication 8, **caractérisé en ce qu'**un message d'alerte est affiché sur le dispositif d'affichage (30) et en particulier l'outil (2) est bloqué à l'utilisation lorsque la prochaine date d'étalonnage (35) est atteinte ou dépassée.

10. Procédé selon la revendication 8 ou la revendication 9, **caractérisé en ce que** la prochaine date d'étalonnage (35) ou l'ensemble de données nécessaire pour déterminer la prochaine date d'étalonnage (35) est transmis sans fil ou de façon filaire au dispositif de réception (40) de l'outil (2).

11. Procédé selon l'une des revendications 8 à 10, **caractérisé en ce qu'**un ensemble de données avec des données d'étalonnage et/ou un ensemble de données avec des conditions environnementales pendant l'opération d'étalonnage et/ou un ensemble de données avec des données concernant le succès de l'opération d'étalonnage sont transmis par le dispositif d'étalonnage (60) à l'unité de réception (40) de l'outil (2) et sont enregistrés sur le support de stockage (20) de l'outil (2), l'ensemble de données avec des données d'étalonnage et/ou l'ensemble de données avec des conditions d'environnement et/ou l'ensemble de données avec des données concernant le succès de l'opération d'étalonnage étant notamment affichés sur le dispositif d'affichage (30).

12. Procédé selon l'une des revendications 8 à 11, **caractérisé en ce que** la prochaine date d'étalonnage (35) stockée dans le support de stockage (20) et affichée sur le dispositif d'affichage (30) est adaptée en fonction d'un nombre de cycles d'utilisation de l'outil (2) et/ou d'un nombre d'événements externes affectant l'étalonnage de l'outil (2).

13. Procédé selon l'une des revendications 8 à 12, **caractérisé en ce que** le dispositif d'étalonnage (60) étalonne automatiquement l'outil (2).
